# EUROPÄISCHE PATENTSCHRIFT

(11) **EP 2 005 043 B1**
(45) Veröffentlichungstag und Bekanntmachung des Hinweises auf die Patenterteilung: **12.05.2010**
(21) Anmeldenummer: 07727196.3
(22) Anmeldetag: 22.03.2007
(51) Int. Cl.: F16K 5/06, F16K 31/00

(54) **FLUIDDOSIERVORRICHTUNG MIT EINEM ANTRIEB ZUR BETÄTIGUNG EINES DREHVENTILELEMENTS**
FLUID DOSING DEVICE HAVING A DRIVE FOR ACTUATING A ROTARY VALVE ELEMENT
DISPOSITIF DE DOSAGE DE FLUIDE DOTE D'UN ENTRAINEMENT D'ACTIONNEMENT D'UN ELEMENT DE SOUPAPE ROTATIVE

(30) Priorität: 30.03.2006 DE 102006014908
(43) Veröffentlichungstag der Anmeldung: 24.12.2008
(73) Patentinhaber: SIEMENS AKTIENGESELLSCHAFT, 80333 München (DE)
(72) Erfinder: GOTTLIEB, Bernhard, 81739 München (DE); KAPPEL, Andreas, 85649 Brunnthal (DE); SCHWEBEL, Tim, 80337 München (DE); WALLENHAUER, Carsten, 01987 Schwarzheide (DE)
(86) Internationale Anmeldenummer: PCT/EP2007/052720
(87) Internationale Veröffentlichungsnummer: WO 2007/113114

(56) Entgegenhaltungen:
- DE-A1- 19 715 505
- FR-A1- 2 709 329
- GB-A- 2 286 840
- US-A- 5 240 022
- US-A- 5 440 969

## Beschreibung

Die Erfindung betrifft eine Fluiddosiervorrichtung mit einem Antrieb zur Betätigung eines Drehventilelements entsprechend dem Oberbegriff von Anspruch 1.

Mit Drehventilelementen wie etwa Drehventilen oder Drehhähnen können hohe Fluidströme gesteuert beziehungsweise geschaltet werden. Dabei wird das Drehventilelement mit Hilfe eines Antriebs rotativ in unterschiedliche Positionen bewegt, sodass die Steuerung des Fluidstroms bewirkt werden kann.

Aus der DE 197 12 581 A1 ist hierzu beispielsweise eine Absperrvorrichtung für eine Fluidleitung bekannt, die als Kugelhahn ausgeführt ist. Dabei wird mit Hilfe eines Antriebs eine Verstellbewegung einer Kugel initiiert, die zu einem Öffnen und Schließen eines Kugelhahns führt. Wie beispielsweise aus der DE 103 39 577 A1 bekannt ist, können derartige Kugelhähne sowohl zum bloßen Öffnen und Schließen, wie auch zum Dosieren des Fluidstroms etwa durch Drosseln der Durchflussmenge des Fluids eingesetzt werden.

Auch in Kraftfahrzeugen können derartige Drehventilelemente eingesetzt werden, wie beispielsweise aus der DE 197 15 505 A1 bekannt ist. In diesem Dokument wird vorgeschlagen, ein Drehventil in einer Kraftfahrzeugeinspritzdüse vorzusehen, um den Kraftstoffdruck mit hoher Genauigkeit zu positionieren und zu fixieren. Damit kann bei offenem Nadelventil in der Kraftstoffeinspritzdüse über das Drehventil die eingespritzte Kraftstoffmenge stufenlos, fein und genau geändert werden. Das Drehventil ist mit einer Antriebswellenanordnung verbunden, die durch das Nadelventil verläuft. Eine Drehbewegung wird durch ein Betätigungsglied eingeleitet, wobei als Betätigungsglied ein Schrittmotor oder ein Servomotor eingesetzt werden. Darüber hinaus sind aus dem Stand der Technik auch pneumatische und hydraulische Stellantriebe zur Einleitung einer Drehbewegung für derartige Drehventile oder Hähne ebenso bekannt wie klassische Elektromotoren mit einem nachgeschalteten Übersetzungsgetriebe.

Insbesondere in Anwendungsbereichen, bei denen es auf eine hochpräzise Dosierung von Fluiden ankommt, wie etwa bei der Dosierung von Kraftstoffen in Einspritzdüsen oder bei der Dosierung von Prozessgasen, Flüssigkeiten oder flüssigen Lebensmitteln, besteht jedoch weiterhin die Forderung nach einer verbesserten Kontrolle des Fluidstroms.

Aus US 5,440,969 ist ein Kugelventil bekannt, das mit luftbetätigten Kolben betrieben wird. Dabei sind die Kolben auf gegenüberliegenden Seiten einer Drehstange angeordnet und mit der Drehstange über ein Drehgelenk verbunden. Abhängig vom Luftdruck, der auf die Kolben einwirkt, wird die Drehstange entsprechend bewegt.

Aus GB 2286840 A ist ein Sicherheitsventil bekannt, das mit Hilfe von zwei Aktoren betätigt wird. Als Aktoren sind federbelastete Kolben vorgesehen.

Aus FR 2709329 A1 ist ein Ventil zur Zuführung von Kraftstoff zu einem Motor bekannt. Das Ventil weist zwei Drehventilelemente auf, wobei jedes Drehventilelement von einem piezoelektrischen Aktor betätigt wird. Abhängig von der Winkelposition der Drehventilelemente wird der Durchfluss des Ventils gesteuert.

Aus US 5,240,022 ist ein automatisches Abschaltventil bekannt.

Aufgabe der vorliegenden Erfindung ist es daher, eine Fluiddosiervorrichtung mit einem Antrieb zur Betätigung eines Drehventilelements vorzuschlagen, mit dem mit relativ geringem Leistungsaufwand Fluidströme genau gesteuert oder geschaltet werden können.

Erfindungsgemäß wird diese Aufgabe durch eine Fluiddosiervorrichtung mit einem Antrieb zur Betätigung eines Drehventilelements mit den Merkmalen gemäß Anspruch 1 gelöst.

Die erfindungsgemäße Fluiddosiervorrichtung weist somit einen Antrieb zur Betätigung eines Drehventilelements auf. Erfindungsgemäß weist der Antrieb zwei Antriebsaktoren auf, deren Elongation der Antrieb auf in eine Rotation des Drehventils umsetzt. Die Antriebsaktoren sind in Form von Linearantrieben ausgebildet. Dabei werden piezoelektrische Aktoren als Linearantriebe eingesetzt. Damit können auch Fluidströme mit relativ geringem Leistungsaufwand gesteuert und geschaltet werden.

Das Drehventilelement wird bevorzugt als Kugelhahn, Kugelventil, Zylinderhahn oder Zylinderventil, Kegelhahn oder Kegelventil ausgeführt und wirkt über eine Antriebswelle spielfrei auf das Drehventilelement. Vorteilhaft ist es auch, wenn der Antrieb so ausgelegt und positioniert ist, dass er mechanisch steif auf das Drehventil einwirkt.

In einer weiteren bevorzugten Ausführungsform der Erfindung sind in der Fluiddosiervorrichtung Sensoren vorgesehen, die insbesondere zur Ermittlung von Druck und Temperatur im Fluid geeignet sind. Damit kann ein hochpräzises Fluid-Dosiersystem aufgebaut werden. Dabei können die mit den Sensoren ermittelten Größen als Werte zur Steuerung oder Regelung in der Fluid-Dosierungsvorrichtung verwenden werden.

Als Antrieb für die Fluiddosiervorrichtung kann ein Antrieb eingesetzt werden, der einen ersten Antriebsaktor und einen zweiten Antriebsaktor aufweist, die zueinander in einem Winkel von insbesondere 90 Grad angeordnet sind. Zur Erzeugung einer Drehbewegung werden die beiden Antriebsaktoren über eine Steuereinrichtung so angesteuert, dass der erste Antriebsaktor und der zweite Antriebsaktor mit einem phasenverschobenen Sinussignal, insbesondere einem um 90 Grad phasenverschobenen Sinussignal gleicher Spitzenamplitude versorgt werden.

Weitere Vorteile und vorteilhafte Ausführungsformen der Erfindung sind Gegenstand der nachfolgenden Figuren sowie deren zugehörige Beschreibungsteile.

Es zeigen im Einzelnen:
- Fig. 1:: schematisch eine Fluiddosiervorrichtung mit einem piezoelektrischen Antriebsaktor
- Fig. 2:: schematisch einen Antrieb für eine Fluiddosiervor- richtung mit einem piezoelektrischen Antriebsaktor

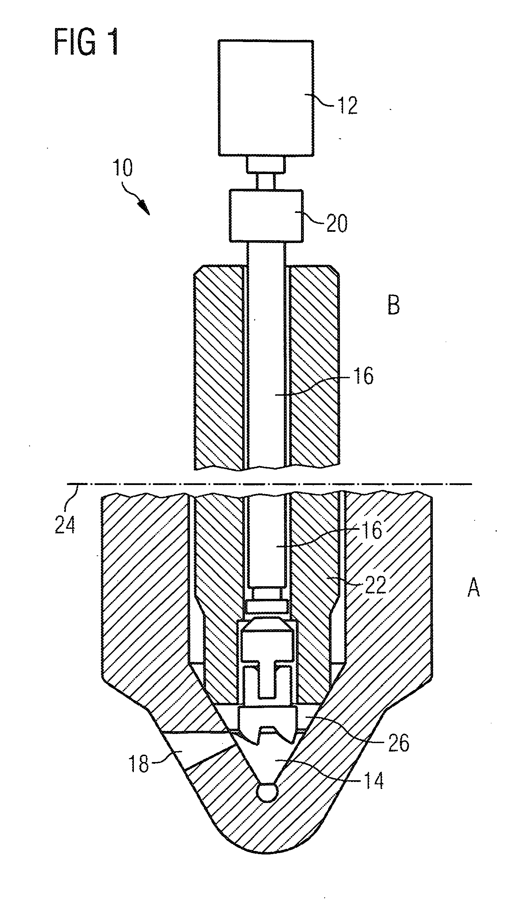

In Fig. 1 ist am Beispiel einer Kraftfahrzeugeinspritzdüse der Einsatz einer erfindungsgemäßen Fluiddosiervorrichtung 10 gezeigt. Dargestellt ist schematisch eine Kraftfahrzeugeinspritzdüse, die zum Zwecke der besseren Übersichtlichkeit eine Unterbrechungsstelle 24 aufweist, um den oberen und unteren Teil der Düse vergrößert darstellen zu können. Die Unterbrechungsstelle 24 trennt den unteren Bereich A von dem oberen Bereich B der Düse. Die Kraftfahrzeugeinspritzdüse weist ein Nadelventil 22 auf, das sich in einer geöffneten Position befindet. Grundsätzlich kann in dieser Anordnung also ein unter hohem Druck eingespritztes Fluid durch einen vorhandenen Düsenauslass 18 aus der Düse entweichen und so in den Verbrennungsraum gelangen. Ein Drehventilelement 14 ist in einer Bohrung 26 angeordnet. Das Drehventilelement 14 kann durch Rotation in unterschiedliche Positionen bewegt werden, die jeweils eine unterschiedliche Dosierung des Fluids, das durch den Düsenauslass 18 austreten kann, bestimmen. Die Drehbewegung wird über eine Antriebswelle 16 in das Drehventilelement 14 eingeleitet.

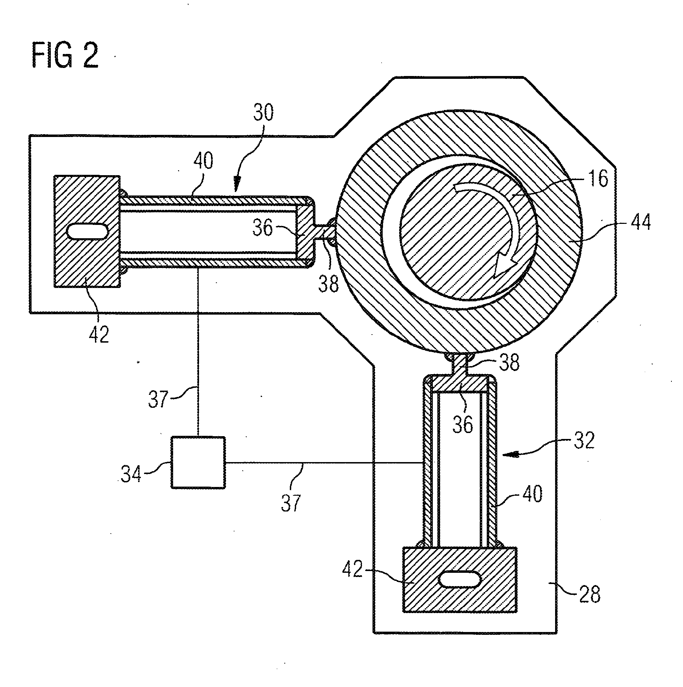

Im oberen Bereich B der Düse setzt sich die Antriebswelle 16 fort. Bevorzugt ist sie über ein Übertragungselement 20 an einen Antrieb 12 gekoppelt. Erfindungsgemäß weist der Antrieb 12 nun einen Linearantrieb, beispielsweise einen piezoelektrischen Antriebsaktor 30, 32 (Fig. 2) auf. Damit kann mit einem relativ geringem Leistungsaufwand von typischerweise 5 bis 50 Watt ein hoher Fluidstrom gesteuert oder geschaltet werden. Anstelle des piezoelektrischen Aktors können auch magnetostriktive oder elektromechanische Aktoren verwendet werden.

Mit einem Linearantrieb 30, 32 lassen sich allerdings grundsätzlich nur lineare Bewegungen realisieren. Daher ist es erforderlich, diese lineare Bewegung in eine Rotationsbewegung umzusetzen. Eine Möglichkeit diese Umsetzung zu realisieren besteht darin, zwei Antriebsaktoren in einem Winkel versetzt zueinander anzuordnen und mit einem Antriebsring zu verbinden. Durch eine geeignete Bestromung der Antriebsaktoren kann dann eine rotative Bewegung des Antriebsringes erreicht werden.

Eine mögliche Ausführung eines derartigen Antriebes 12 ist in Fig. 2 als Schnittdarstellung in Aufsicht dargestellt. Der Antrieb 12 weist eine Grundplatte 28 auf, in der die Antriebswelle 16 möglichst spielfrei drehbar gelagert ist. Der Antrieb 12 weist weiterhin einen ersten Antriebsaktor 30 sowie einen zweiten Antriebsaktor 32 auf. Die beiden Antriebsaktoren 30, 32 sind in einem Winkel zueinander angeordnet, bevorzugt, wie in Fig. 2 gezeigt, in einem Winkel von 90 Grad. Werden die beiden Antriebsaktoren 30, 32 elektrisch angesteuert, so dehnen sie sich in Längsrichtung, also axial, entsprechend der Stärke der elektrischen Ansteuerung, d. h. im Wesentlichen proportional zu der angelegten elektrischen Spannung aus. Dabei hängt die Stärke der Ausdehnung auch von der Art der verwendeten Antriebsaktoren ab.

Jeder Antriebsaktor 30, 32 ist zwischen einer Kopfplatte 36 und einem Lagerblock 42 unter Vorspannung verbaut. Der Lagerblock ist mit der Grundplatte 28 fest verbunden, insbesondere verschweißt. Das Verbauen unter Vorspannung verhindert, dass der Antriebsaktor 30, 32 durch Zugspannungskräfte, die insbesondere im Hochfrequenzspannungsbetrieb auftreten können, beschädigt wird. Weiterhin ist jeweils zwischen der Kopfplatte 36 und dem Lagerblock 42 eine Vorspannfeder 40 vorgesehen, die eine geringe Federkonstante aufweist. Damit wird die Rückstellung des Antriebsaktors 30, 32 unterstützt, wenn dieser elektrisch entladen wird.

Die Kopfplatte 36 weist einen Stößel 38 auf, der mit dem Antriebsring 44 fest verbunden, insbesondere verschweißt ist. Damit ist jeder Antriebsaktor 30, 32 über die Kopfplatte fest mit dem Antriebsring 44 verbunden, sodass eine linearen Bewegung des Antriebsaktors 30, 32 auf den Antriebsring 44 übertragen wird. Um die Übertragung der Bewegung zu optimieren wird der Antriebsring 44 bevorzugt möglichst steif, massearm und konzentrisch ausgeführt. Der Innendurchmesser des Antriebsringes 44 ist etwas größer gehalten als der Außendurchmesser der Antriebswelle 16. Die Stößel 38 der Kopfplatten 36 sind in einem Abstand zur Grundplatte 28 angeordnet und damit frei beweglich, sodass sie eine Bewegung des Antriebsaktors 30, 32 auf den Antriebsring 44 übertragen können.

Durch die Anordnung der Antriebsaktoren 30, 32 in einem Winkel zueinander ist es möglich, eine kreisförmige Verschiebebewegung des Antriebsringes 44 zu erzeugen. Hierzu werden die Antriebsaktoren 30, 32 mit zwei zueinander phasenverschobenen sinusförmigen Signalen gleicher Spitzenamplitude von einer Steuereinrichtung 34 über Zuleitungen 37 angesteuert. Für den Fall, dass die Antriebsaktoren 30, 32 in einem Winkel von 90 Grad angeordnet sind beträgt auch die Phasenverschiebung des Signals 90 Grad. Mit dieser Anordnung kann ähnlich der Erzeugung von Lissajous-Figuren eine kreisförmige Bewegung durch die Kombination zweier linearer Bewegungen der Antriebsaktoren 30, 32 erreicht werden.

Da der Antriebsring 44 zu der Antriebswelle 16 in starkem Reibschluss oder Formschluss steht, wird diese kreisförmige Bewegung auf die Antriebswelle 16 übertragen. An geeigneten Stellen können zur Regelung oder Steuerung des Antriebes 12 Sensoren vorgesehen werden, mit deren Hilfe relevante Eigenschaften des Fluids, wie etwa seine Temperatur oder sein Druck gemessen werden können. Insbesondere können derartige Sensoren an oder nach dem Düsenauslass 18 angeordnet werden.

Die erfindungsgemäße Fluid-Dosiereinrichtung wurde zwar anhand einer Kraftfahrzeugeinspritzdüse beschrieben, jedoch kann sie grundsätzlich auch für andere Arten von Fluiden, wie Gase oder Flüssigkeiten und für andere Anwendungsgebiete eingesetzt und ausgeführt werden. Beispielsweise kann die erfindungsgemäße Fluid-Dosiereinrichtung im Bereich der Verfahrenstechnik zur Steuerung von Gasen, Flüssigkeiten, insbesondere von Prozessgasen und flüssigen Lebensmitteln oder bei der Verarbeitung und Herstellung von Lebensmitteln eingesetzt werden.

## Patentansprüche

1. Fluiddosiervorrichtung (10) mit einem Antrieb (12) zur Betätigung eines Drehventilelements (14), wobei der Antrieb (12) zwei Antriebsaktoren (30, 32) aufweist, und eine Elongation der zwei Antriebsaktoren (30, 32) in eine Rotation des Drehventilelementes (14) umsetzt, wobei der Antrieb (12) mit dem Drehventilelement (14) gekoppelt ist,
**dadurch gekennzeichnet, dass** die zwei Antriebsaktoren (30, 32) in Form von piezoelektrischen Linearantrieben ausgebildet sind.

2. Fluiddosiervorrichtung (10) nach Anspruch 1,
**dadurch gekennzeichnet, dass**
das Drehventilelement (14) als Kugelhahn, Kugelventil, Zylinderhahn oder Zylinderventil, Kegelhahn oder Kegelventil ausgeführt ist.

3. Fluiddosiervorrichtung (10) nach Anspruch 1 oder 2,
**dadurch gekennzeichnet, dass**
der Antrieb (12) über eine Antriebswelle (16) spielfrei auf das Drehventilelement (14) wirkt.

4. Fluiddosiervorrichtung (10) nach einem der Ansprüche 1 bis 3,
**dadurch gekennzeichnet, dass**
der Antrieb (12) über eine Antriebswelle (16) mechanisch steif auf das Drehventilelement (14) wirkt.

5. Fluiddosiervorrichtung (10) nach einem der Ansprüche 1 bis 4,
**dadurch gekennzeichnet, dass**
die Fluiddosiervorrichtung (10) Sensoren, insbesondere zur Ermittlung von Druck und Temperatur im Fluid aufweist.

6. Fluiddosiervorrichtung (10) nach einem der Ansprüche 1 bis 5,
**dadurch gekennzeichnet, dass**
der Antrieb (12) einen ersten Antriebsaktor (30) und einen zweiten Antriebsaktor (32) aufweist, die zueinander in einem Winkel von insbesondere 90 Grad angeordnet sind.

7. Fluiddosiervorrichtung (10) nach Anspruch 6,
**dadurch gekennzeichnet, dass**
eine Steuereinrichtung (34) zum Ansteuern des ersten Antriebsaktors (30) und des zweiten Antriebsaktors (32) vorgesehen ist, die den ersten Antriebsaktor (30) und den zweiten Antriebsaktor (32) mit einem phasenverschobenen Sinussignal, insbesondere einem um 90 Grad phasenverschobenen Sinussignal ansteuert.

## Claims

1. Fluid dosing device (10) having a drive (12) for actuating a rotary valve element (14), wherein the drive (12) has two drive actuators (30, 32) and converts an elongation of the two drive actuators (30, 32) into a rotation of the rotary valve element (14), wherein the drive (12) is coupled to the rotary valve element (14),
**characterised in that** the two drive actuators (30, 32) are embodied in the form of piezoelectric linear drives.

2. Fluid dosing device (10) according to claim 1,
**characterised in that**
the rotary valve element (14) is embodied as a ball cock, ball valve, cylinder cock or cylinder valve, plug cock or plug valve.

3. Fluid dosing device (10) according to claim 1 or 2,
**characterised in that**
the drive (12) acts on the rotary valve element (14) free of play via a drive shaft (16).

4. Fluid dosing device (10) according to one of claims 1 to 3,
**characterised in that**
the drive (12) acts on the rotary valve element (14) in a mechanically rigid manner via a drive shaft (16).

5. Fluid dosing device (10) according to one of claims 1 to 4,
**characterised in that**
the fluid dosing device (10) has sensors, in particular for measuring pressure and temperature in the fluid.

6. Fluid dosing device (10) according to one of claims 1 to 5,
**characterised in that**
the drive (12) has a first drive actuator (30) and a second drive actuator (32) which are arranged at an angle of in particular 90 degrees relative to one another.

7. Fluid dosing device (10) according to claim 6,
**characterised in that**
a control device (34) for controlling the first drive actuator (30) and the second drive actuator (32) is provided which controls the first drive actuator (30) and the second drive actuator (32) by means of a phase-shifted sinusoidal signal, in particular a sinusoidal signal phase-shifted through 90 degrees.

## Revendications

1. Dispositif de dosage de fluides (10) comprenant un entraînement (12) pour l'activation d'un élément à valve rotative (14), l'entraînement (12) présentant deux acteurs d'entraînement (30, 32) et convertissant une élongation des deux acteurs d'entraînement (30, 32) en une rotation de l'élément à valve rotative (14), l'entraînement (12) étant couplé à l'élément à valve rotative (14),
**caractérisé en ce que** les deux acteurs d'entraînement (30, 32) sont réalisés sous forme d'entraînement linéaires piézoélectriques.

2. Dispositif de dosage de fluides (10) selon la revendication 1,
**caractérisé en ce que**
l'élément à valve rotative (14) est exécuté en tant que robinet à boisseau sphérique, soupape à bille, robinet à tournant cylindrique ou soupape à cylindre, robinet à boisseau conique ou vanne à boisseau conique.

3. Dispositif de dosage de fluides (10) selon la revendication 1 ou 2,
**caractérisé en ce que**
l'entraînement (12) agit sans jeu sur l'élément à valve rotative (14) par l'intermédiaire d'un arbre moteur (16).

4. Dispositif de dosage de fluides (10) selon l'une quelconque des revendications 1 à 3,
**caractérisé en ce que**
l'entraînement (12) agit de manière mécanique rigide sur l'élément à valve rotative (14) par l'intermédiaire d'un arbre moteur (16).

5. Dispositif de dosage de fluides (10) selon l'une quelconque des revendications 1 à 4,
**caractérisé en ce que**
le dispositif de dosage de fluides (10) présente des capteurs, notamment pour détecter la pression et la température dans le fluide.

6. Dispositif de dosage de fluides (10) selon l'une quelconque des revendications 1 à 5,
**caractérisé en ce que**
l'entraînement (12) présente un premier acteur d'entraînement (30) et un second acteur d'entraînement (32), qui sont disposés à un angle de notamment 90 degrés l'un par rapport à l'autre.

7. Dispositif de dosage de fluides (10) selon la revendication 6,
**caractérisé en ce qu'**
un dispositif de commande (34) destiné à commander le premier acteur d'entraînement (30) et le second acteur d'entraînement (32) est ménagé, lequel commande le premier acteur d'entraînement (30) et le second acteur d'entraînement (32) à l'aide d'un signal sinusoïdal déphasé, notamment à l'aide d'un signal sinusoïdal déphasé de 90 degrés.
